# EUROPEAN PATENT SPECIFICATION

(11) **EP 4 592 825 B1**
(45) Date of publication and mention of the grant of the patent: **05.08.2026**
(21) Application number: 24184643.5
(22) Date of filing: 26.06.2024
(51) Int. Cl.: G06F 8/34

(54) **IOT GATEWAY AND SCRIPT VARIABLE BINDING METHOD THEREOF**
IOT-GATEWAY UND SCRIPT-VARIABLES BINDUNGSVERFAHREN DAFÜR
PASSERELLE IDO ET SON PROCÉDÉ DE LIAISON VARIABLE DE SCRIPT

(30) Priority: 29.01.2024 TW 113103257
(43) Date of publication of application: 30.07.2025
(73) Proprietor: Moxa Inc., 242032 New Taipei City (TW)
(72) Inventor: Tung, Cheng-Ping, 242032 New Taipei City (TW); Lu, Wei-Ting, 242032 New Taipei City (TW); Lu, Chia-Ling, 242032 New Taipei City (TW)
(74) Representative: Kurig, Thomas

(56) References cited:
- US-A1- 2017 083 292
- GERGELY MEZEI ET AL: "The Dynamic Sensor Data Description and Data Format Conversion Language :", PROCEEDINGS OF THE 13TH INTERNATIONAL CONFERENCE ON SOFTWARE TECHNOLOGIES, 1 January 2018 (2018-01-01), pages 338 - 346, XP055627380, ISBN: 978-989-7583-20-9, DOI: 10.5220/0006912203380346

## Description

### BACKGROUND

### Field of the Disclosure

The present disclosure relates to an application deployment technology, and in particular to an Internet of Things gateway and script variable binding method thereof.

### Description of Related Art

Nowadays, there is a rapidly growing demand for edge computing in the field of Internet of Things (IoT). Currently, in most cases, the edge computing function of the IoT gateway is still implemented by writing program scripts or codes. However, when the application scenarios of IoT gateways change, it is often necessary to rewrite and redeploy program scripts or codes for the new application scenarios. It goes without saying that the single-time programming method is quite inflexible and requires a high degree of labor cost for implementation. Moreover, in actual applications, IoT gateways need to process a variety of data. Since the IoT gateway serves as a communication bridge and has edge computing functions, the IoT gateway needs to simultaneously support the data formats required by various devices in the IoT field and support the data formats required by various back-end application services. Therefore, how to bind prescribed data to the corresponding computational logic is a key issue that IoT gateways need to solve.

In addition, the application of low code/no code technology in the field of Internet of Things is increasing day by day. The application of low-code technology may help designers and developers build integrated IoT systems with less coding and less manual operations. In the IoT field, the application of low-code/no-code platforms may help reduce complexity of development, reduce errors and improve productivity. However, although low-code technology makes development easier, when it is necessary to change or adjust input and output variables or logic, it still requires some labor cost for customization or to write code to satisfy specific needs and functions.
US 2017/083292 A1 discloses techniques for developing software applications that call a virtualized computing environment. A graphical user interface is rendered that is operable to graphically depict a representation of an input, output, and operation based on user input data. Graphical depictions of the representation of the input, output, and operation are rendered. The rendered graphical depictions are associated with related executable code operable to execute functionality implementing the input, output, and operation and call services in the virtualized computing environment.
GERGELY MEZEI ET AL: "The dynamic sensor data description and data format conversion language" defines a script language for dynamic sensor data description and data format conversion called Language for Sensor Data Description (L4SDD). A compiler and a workbench for the language are built, thus acting as a complete framework to define data transformations for IoT sensors to achieve syntactic interoperability.

### SUMMARY OF THE DISCLOSURE

The present invention is provided in appended claims 1. The following disclosure serves a better understanding of the present invention. In view of the foregoing, embodiments of the present disclosure provide a script variable binding method and an Internet of Things (IoT) gateway using the method, which may solve the above technical problems.

The script variable binding method of the embodiment of the present disclosure is applicable for IoT gateways and includes (but is not limited to) the following steps. The script variable binding method includes the following steps. A data property and a data source of an input tag are defined. A logic script is generated based on the input tag using a visual programming editing tool. When the logic script is executed, a script input variable is extracted from source data provided by an IoT device according to the data property and the data source of the input tag. When the logic script is executed, a script output variable is generated based on computational logic of the logic script and the script input variable corresponding to the input tag. The script output variable is outputted to a data destination.

The IoT gateway according to the embodiment of the present disclosure includes a transceiver, a storage device and a processor. The processor is connected to the transceiver and the storage device and is configured to perform the following operations. The script variable binding method includes the following steps. A data property and a data source of an input tag are defined. A logic script is generated based on the input tag using a visual programming editing tool. When the logic script is executed, a script input variable is extracted from source data provided by an IoT device according to the data property and the data source of the input tag. When the logic script is executed, a script output variable is generated based on computational logic of the logic script and the script input variable corresponding to the input tag. The script output variable is outputted to a data destination.

Based on the above, in the embodiment of the present disclosure, after defining the data properties and data sources of the input tags, a visual programming editing tool may be used and the input tag may serve as script input to edit the logic script. In this way, users may flexibly define the input data of the logic script without having to customize the logic script according to changes in IoT scenarios. As a result, the convenience and efficiency of deploying IoT gateways may be improved significantly.

In order to make the above-mentioned features and advantages of the present disclosure more clear and easy to understand, embodiments are given below and described in detail with reference to the attached drawings.

### BRIEF DESCRIPTION OF THE DRAWINGS

FIG. 1 is a schematic diagram of an IoT system according to an embodiment of the present disclosure.
FIG. 2 is a block diagram of an IoT gateway according to an embodiment of the present disclosure.
FIG. 3 is a schematic diagram of a script variable binding method according to an embodiment of the present disclosure.
FIG. 4 is a flow chart of a script variable binding method according to an embodiment of the present disclosure.
FIG. 5 is a schematic diagram of input tags bound with script input variables according to an embodiment of the present disclosure.
FIG. 6 is a flow chart of a script variable binding method according to an embodiment of the present disclosure.
FIG. 7 is a schematic diagram of using a visual programming editing tool according to an embodiment of the present disclosure.
FIG. 8A and FIG. 8B are schematic diagrams of output tags bound with script output variables according to an embodiment of the present disclosure.
FIG. 9 is a schematic diagram of input tags bound with different script input variables of different data formats according to an embodiment of the present disclosure.
FIG. 10 is a schematic diagram of binding multiple input tags to the same source data according to an embodiment of the present disclosure.

### DESCRIPTION OF EMBODIMENTS

Some embodiments of the present disclosure will be described in detail with reference to the accompanying drawings. The reference symbols cited in the following description will be regarded as the same or similar components when the same reference symbols appear in different drawings. These embodiments are only part of the present disclosure and do not disclose all possible implementations of the present disclosure. Rather, these embodiments are only examples of methods and apparatuses within the claims of the present disclosure.

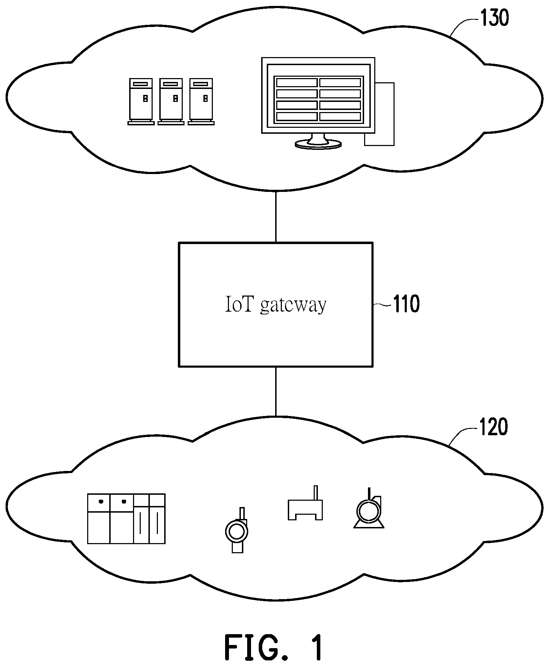

FIG. 1 is a schematic diagram of an IoT system according to an embodiment of the present disclosure. Referring to FIG. 1, the IoT system 10 includes an IoT gateway 110, a local network 120 and an external network 130. The IoT system 10 may be an Industrial IoT (IIoT) system. The IIoT is the expansion and use of IoT in the industrial field.

The local network 120 may include multiple IoT devices. The IoT devices may be sensors, cameras, industrial equipment, measurement equipment, etc. Alternatively, IoT devices may be computers, programmable logic controllers (PLCs), etc. IoT devices in the local network 120 may be connected to the IoT gateway 110 directly or indirectly. The IoT device may be connected to the IoT gateway 110 through a wired or wireless communication link. The wired or wireless communication link supports, for example, Wi-Fi, Bluetooth, WirelessHART, HART-IP and other communication protocols.

The IoT gateway 110 is connected between the local network 120 and the external network 130. In some embodiments, the IoT gateway 110 may be equipped with an edge computing function, and may perform logical computation based on data collected from IoT devices in the local network 120, and transmit the logical computation results to computers or storage device in the external network 130. For example, the external network 130 may include private servers or public servers provided by a cloud computing platform. The IoT gateway 110 may transmit data to computer devices or storage devices in the external network 130 based on various transmission protocols. The transmission protocol is, for example, Message Queuing Telemetry Transport (MQTT) or Simple Network Management Protocol (SNMP), etc., but is not limited thereto.

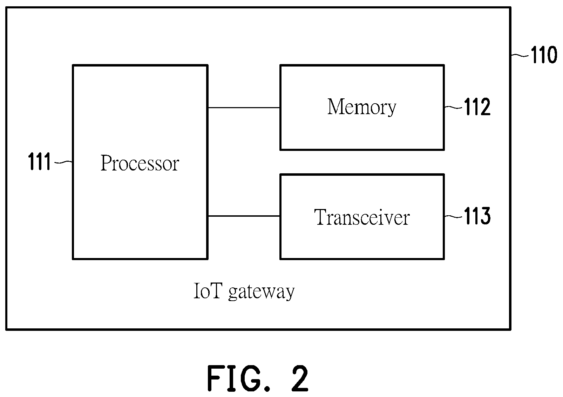

FIG. 2 is a block diagram of an IoT gateway according to an embodiment of the present disclosure. Referring to FIG. 2, the IoT gateway 110 includes a transceiver 113, a memory 112 and a processor 111.

The memory 112 may be used to store instructions, program codes, software modules, etc., and may be, for example, any type of fixed or removable random access memory (RAM), read-only memory (ROM), flash memory or other similar devices, integrated circuits and combinations thereof.

The processor 111 may be a central processing unit (CPU), a general-purpose processor, or other programmable general-purpose or special-purpose microprocessor, digital signal processor (DSP), programmable controller, Field Programmable Gate Array (FPGA), Application-Specific Integrated Circuit (ASIC) or other similar components or a combination of the above components.

In different embodiments, the memory 112 may be a separate device independent of the processor 111, or may be integrated within the processor 111.

The processor 111 may access and execute the software module recorded in the memory 112 to implement the script variable binding method in the embodiment of the present disclosure. The software modules described above may be broadly construed to mean instructions, instruction sets, code, program code, programs, applications, software packages, threads, procedure, functions, etc., whether referred to as software, firmware, middleware, microcode, hardware description language, or others.

The transceiver 113 has a transmitter (for example, a transmission circuit) and a receiver (for example, a reception circuit). In some embodiments, the transceiver 113 may be used to send and receive time-frequency division information. The transceiver 113 may perform low-noise amplification (LNA), impedance matching, analog-to-digital conversion (ADC), digital-to-analog conversion (DAC), frequency mixing, up and down frequency conversion, filtering, amplification, and/or similar operations. For example, the transceiver 113 may comply with 3GPP standards (such as LTE standards or 5G standards, etc.) or may be a WiFi or Bluetooth transceiver that complies with 802.xx standards. For example, the transceiver 113 may be included in a USB port or interface used to establish a wired connection.

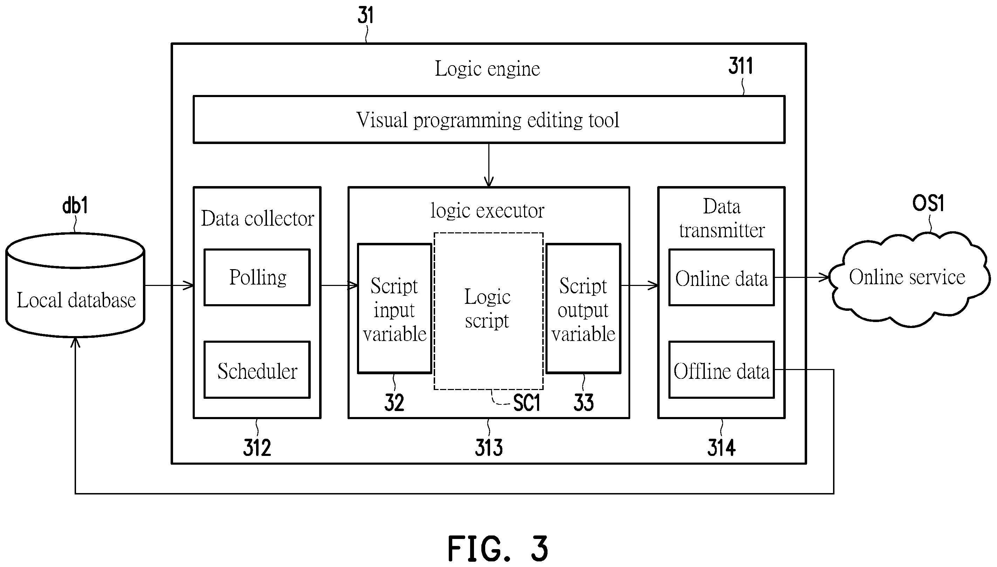

FIG. 3 is a schematic diagram of a script variable binding method according to an embodiment of the present disclosure. Referring to FIG. 3, in different embodiments, the logic engine 31 may be deployed on the IoT gateway 110, other IoT devices or cloud servers. The logic engine 31 includes a visual programming editing tool 311, a data collector 312, a data transmitter 314, and a logic executor 313. In some embodiments, various software components within the logic engine 31 may be executed by the processor 111 shown in FIG. 2.

The visual programming editing tool 311 provides a visual programming editing interface. The visual programming editing tool 311 allows users to create, edit or manage program codes or other types of logical structures in a visual manner. The visual programming editing tool 311 may be a low code programming editing tool or a no code programming editing tool. Furthermore, a visual programming editing interface is, for example, an editing interface that allows users to intuitively design and build program logic through drag-and-drop operations instead of writing program code directly. The user may create program logic according to the drag operation on the visual programming editing interface, and the visual programming editing tool 311 may convert the visual structure designed by the user into a logic script or program code. For example, the visual programming editing tool 311 may be Blockly, but is not limited thereto. Alternatively, the visual programming editing interface is, for example, an editing interface that allows the user to directly use tags to perform simple logical coding based on the tag name as a variable. The visual programming editing tool 311 may generate a logic script SC1 executed by the logic executor 313.

The source data provided by the IoT device may be stored in the local database db1 after data formatting. After data formatting, the data recorded in the local database db1 may be unified into a specific data schema format, such as JSON format or other formats. For example, the sensing data (i.e., source data) provided by the temperature sensor may be converted into JSON format and stored in the local database db1.

The data collector 312 queries the local database db1 according to the data sampling method and sampling schedule to obtain the source data provided by the IoT device. The data sampling method and sampling schedule may be set by the user or determined by other methods. The above-mentioned data sampling method is, for example, polling. For example, the data collector 312 may periodically query the local database db1 to obtain the latest sensing data provided by a certain temperature sensor. The polling interval may be set by the user. In other embodiments, the data collector 312 may directly obtain the data of the IoT device as the source data.

The logic executor 313 may obtain the script input variable 32 from the source data in the local database db1, and execute the logic script SC1 generated by the visual programming editing tool 311 based on the script input variable 32. After the logic executor 313 executes the logic script SC1 generated by the visual programming editing tool 311, the logic executor 31 may generate the script output variable 33.

In some embodiments, the data transmitter 314 may convert the script output variable 33 generated by the logic executor 31 into online data and transmit the online data to the online service OS1, so that the online service OS1 may obtain the computational result of the logic script SC1. Here, online data represents data transmitted based on a transmission protocol. The online service OS1 is, for example, an edge application service provided by a cloud computing platform (such as Azure platform), etc. Alternatively, in some embodiments, the data transmitter 314 may convert the script output variable 33 generated by the logic executor 31 into offline data and transmit the offline data to the local database db1, so as to record the computational result of the logic script SC1 to the local database db1.

It should be noted that in the embodiment of the present disclosure, the logic script SC1 is established based on the input tag bound to the specific data in the source data. On the other hand, the logic script SC1 may also be established based on the output tag bound to a specific data output method. That is to say, before editing the logic script SC1, the user may perform the setting steps of the input tag and the output tag. Then, users may use the defined input tags and output tags to design script logic. Several embodiments will be enumerated below to illustrate the principle of the present disclosure.

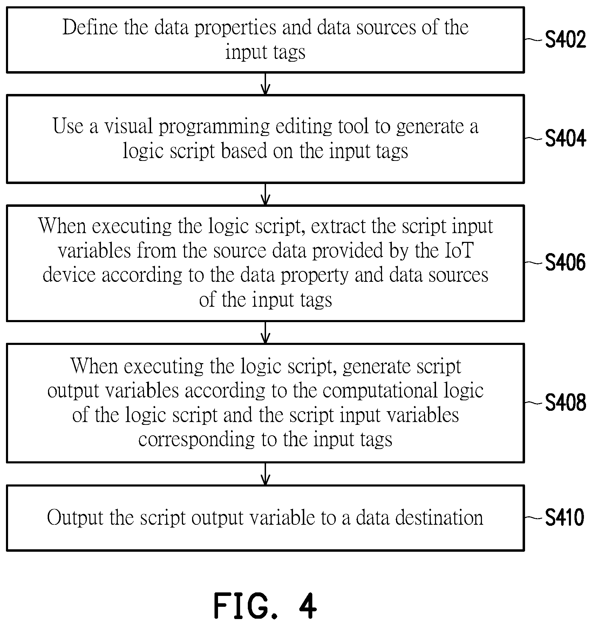

FIG. 4 is a flow chart of a script variable binding method according to an embodiment of the present disclosure. Please refer to FIG. 4. The method in this embodiment may be executed by the IoT gateway 110 in FIG. 2. The details of each step in FIG. 4 will be described below with the components shown in FIG. 2.

In step S402, the processor 111 defines the data properties and data sources of the input tags. Based on the data property and the data source of the input tag, the input tag may be bound to specific data in the source data to set this specific data as a script input variable.

In some embodiments, the processor 111 provides a tag setting interface. According to the user operation performed on the tag setting interface, the processor 111 determines the data property and data source of the input tag. The processor 111 may define the tag name of the input tag according to the tag name input by the user in the tag setting interface. The processor 111 may define the data source of the input tag according to the data storage location selected by the user in the tag setting interface. Furthermore, the processor 111 may provide multiple candidate data properties (for example, multiple key values in JSON format) based on the data schema format of the source data, and the processor 111 selects one of the multiple candidate data properties as the data property of the input tag according to the user command.

In step S404, the processor 111 uses a visual programming editing tool to generate a logic script based on the input tags. That is to say, the user may drag the graphical component corresponding to the input tag in the visual programming editing interface provided by the visual programming editing tool to construct script logic, so that the visual programming editing tool may generate a logic script including the input tag.

In step S406, when executing the logic script, the processor 111 extracts the script input variables from the source data provided by the IoT device according to the data property and data sources of the input tags. In some embodiments, the input tag will be recorded in the configuration of the logic executor, including the data property and data sources of the input tag, so that when the logic executor executed by the processor 111 executes the script, the script input variables may be determined based on input tags in the configuration of the logic executor.

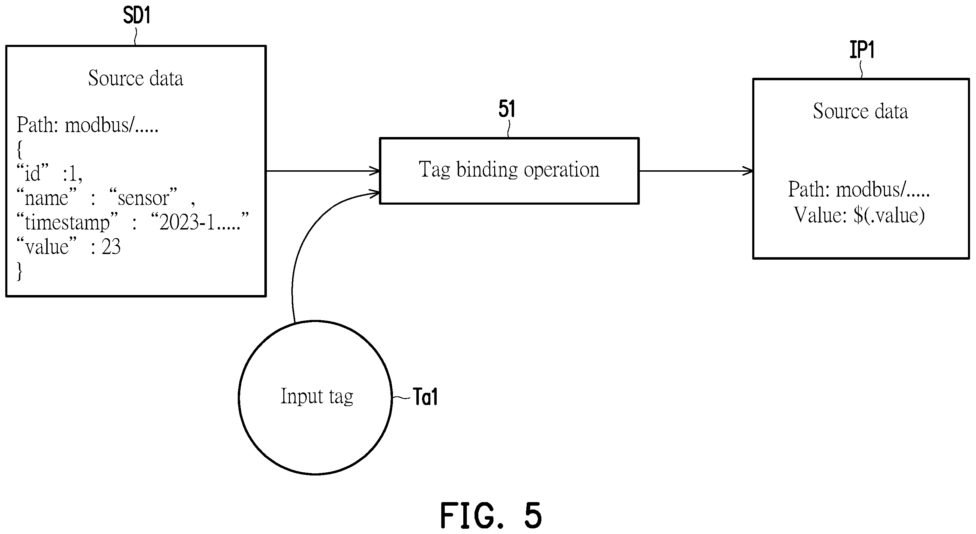

FIG. 5 is a schematic diagram of input tag bound with script input variables according to an embodiment of the present disclosure. Referring to FIG. 5, the processor 111 may obtain the source data SD1 provided by the IoT device. After the tag binding operation 51, the processor 111 may determine the script input variable IP1 according to the data property and data source of the input tag Ta1. The data source is, for example, the storage path of the source data SD1. In some embodiments, the source data SD1 provided by the IoT device may include one or more JSON objects. In the example of FIG. 5, the source data SD1 in JSON format includes multiple values corresponding to multiple keys. When the data property of the input tag Ta1 is set to "value", the processor 111 may extract the value corresponding to the key "value" from the source data SD1 as the script input variable IP1 according to the input tag Ta1.

In step S408, when executing the logic script, the processor 111 generates script output variables according to the computational logic of the logic script and the script input variables corresponding to the input tags. The computational logic of a logic script may include loop logic, conditional logic, or other program logic structures used for data processing and process control. The processor 111 may substitute the script input variables into the computational logic of the logic script to generate the computational result of the computational logic. For example, the computational logic of the logic script may include unit conversion calculations or data format conversion, etc.

In step S410, the processor 111 outputs the script output variable to a data destination. In some embodiments, the output processing of the script output variables may be included in the logic script, that is, the processor 111 may output the script output variables to the data destination according to the code of the logic script. Alternatively, in some embodiments, the output processing of script output variables may be determined based on the output tag. The processor 111 may output the script output variable to the data destination according to the output tag bound to the specific data output method.

It should be noted that the above description is based on the steps shown in FIG. 4 being executed by the IoT gateway 110, but the present disclosure is not limited thereto. In other embodiments, each step shown in FIG. 4 may also be executed by other computer devices or cloud servers.

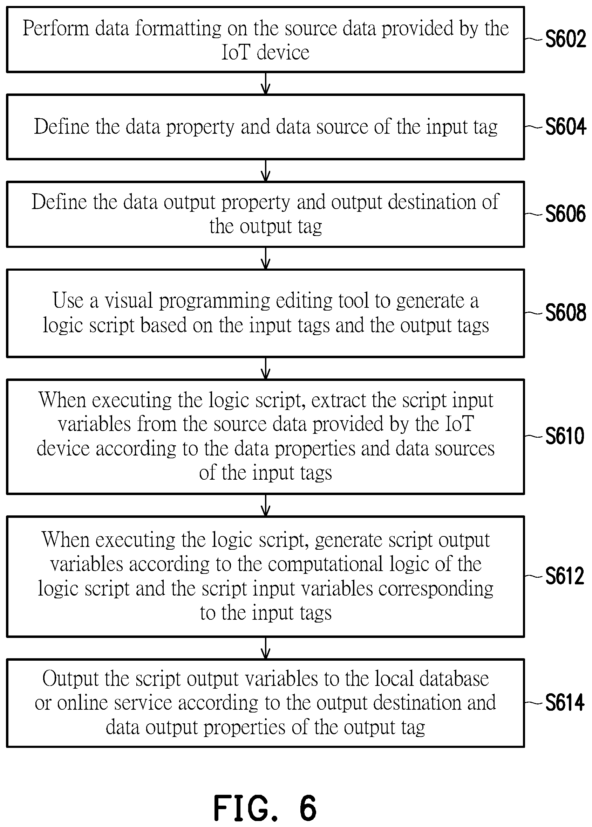

FIG. 6 is a flow chart of a script variable binding method according to an embodiment of the present disclosure. Referring to FIG. 6, the method in this embodiment may be executed by the IoT gateway 110 in FIG. 2. The details of each step in FIG. 6 will be described below with reference to the components shown in FIG. 3.

In step S602, the processor 111 performs data formatting on the source data provided by the IoT device, so that the source data conforms to a data schema format. The above data schema format is, for example, JSON format, XML format or other formats.

In step S604, the processor 111 defines the data property and data source of the input tag based on the data schema format. The step has been illustrated in the embodiment of FIG. 3 and will not be described again here.

In step S606, the processor 111 defines the data output property and output destination of the output tag. Based on the data output property and output destination of the output tag, the output tag may be bound to a specific data output method, and the processor 111 will output the computational result of the logic script according to the specific data output method.

In some embodiments, the processor 111 provides a tag setting interface. According to the user operation on the tag setting interface, the processor 111 determines the data output property and output destination of the output tag. Specifically, the processor 111 may define the tag name of the output tag according to the tag name input by the user in the tag setting interface, and define the data output property and output destination of the output tag according to the specific data output method set by the user in the tag setting interface.

In some embodiments, the data output property of the output tag include data storage paths, transmission protocols, service identification information of online services, or combinations thereof. The output destination of the output tag may include offline destinations and online destinations.

In step S608, the processor 111 uses a visual programming editing tool to generate a logic script based on the input tags and the output tags. That is to say, the user may drag the graphical components respectively corresponding to the input tag and the output tag in the visual programming editing interface provided by the visual programming editing tool to construct script logic, so that the visual programming editing tool may generate the logic script of input tags and output tags. According to the drag operation applied to the graphical components respectively corresponding to the input tag and the output tag, the processor 111 may construct the script logic and generate the corresponding logic script.

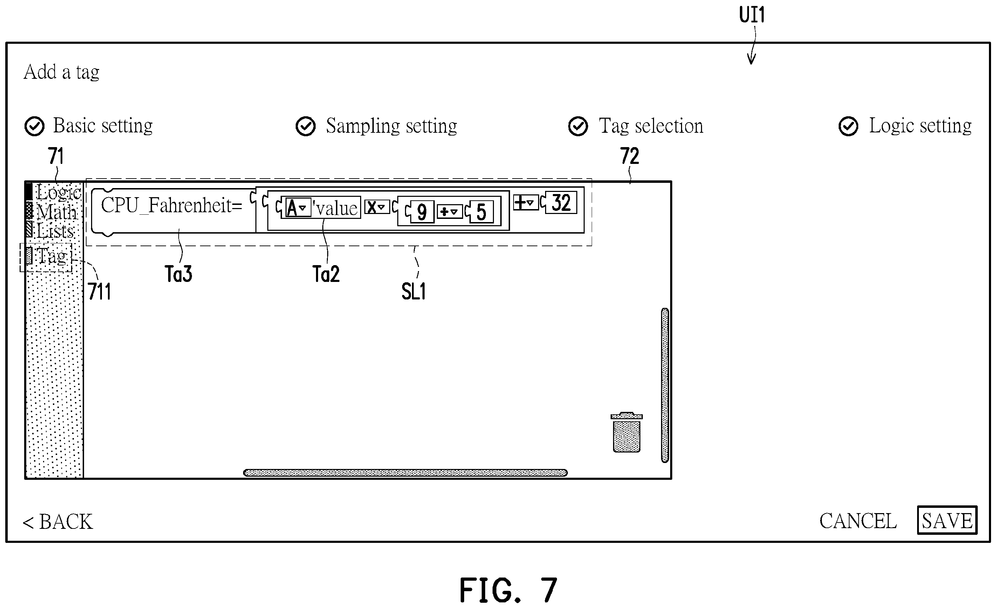

For example, FIG. 7 is a schematic diagram of using a visual programming editing tool according to an embodiment of the present disclosure. Please refer to FIG. 7, taking the visual programming editing tool Blockly as an example for illustration. The visual programming editing interface UI1 provided by the visual programming editing tool includes a building block panel 71 and an editing area 72. The building block panel 71 includes tag options 711 associated with input tags and output tags. The user may click the tags option 711 and drag the block of the input tags Ta2 and the block of the output tags Ta3 to the editing area 72 to construct the script logic SL1. In the example of FIG. 7, the script logic SL1 may be used to convert temperatures from Celsius to Fahrenheit.

In addition, in some embodiments, the processor 111 may record the data properties and data sources of the input tags in the configuration of the logical executor, and record the data output property and output destinations of the output tags in the metadata of the logic script. Therefore, when the running logic executor executes the logic script, the processor 111 may determine the script input variables according to the configuration of the logic executor and determine the data flow direction of the script output variables according to the metadata of the logic script.

In step S610, when executing the logic script, the processor 111 extracts the script input variables from the source data provided by the IoT device according to the data properties and data sources of the input tags. In step S612, when executing the logic script, the processor 111 generates script output variables according to the computational logic of the logic script and the script input variables corresponding to the input tags. These steps have been illustrated in the embodiment of FIG. 2 and will not be repeated here.

In step S614, the processor 111 outputs the script output variables to the local database or online service according to the output destination and data output properties of the output tag. In other words, the output tag may be used to determine whether the script output variable is online data or offline data. The online data may be transmitted to other application services via the transmission protocol indicated by the output tag. The offline data may be transmitted to a local database and stored based on the storage path indicated by the output tag.

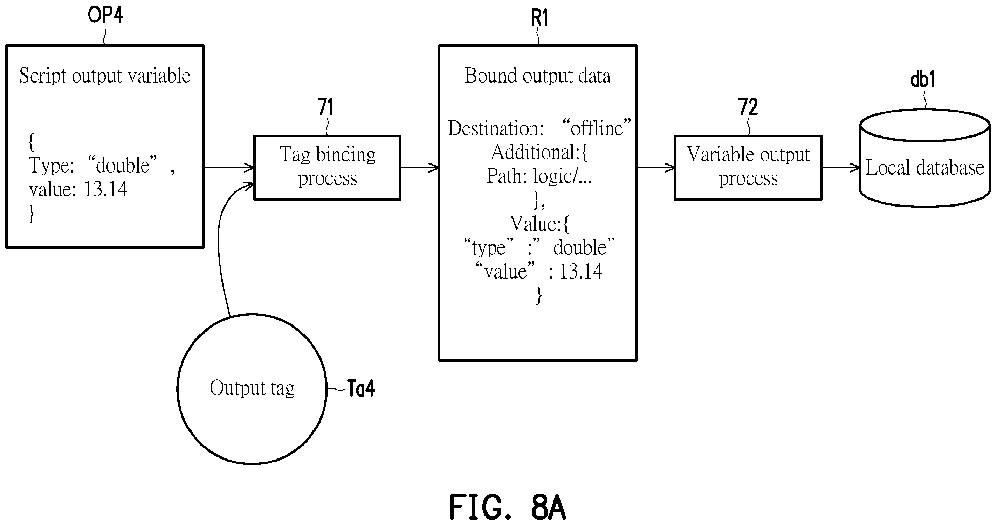

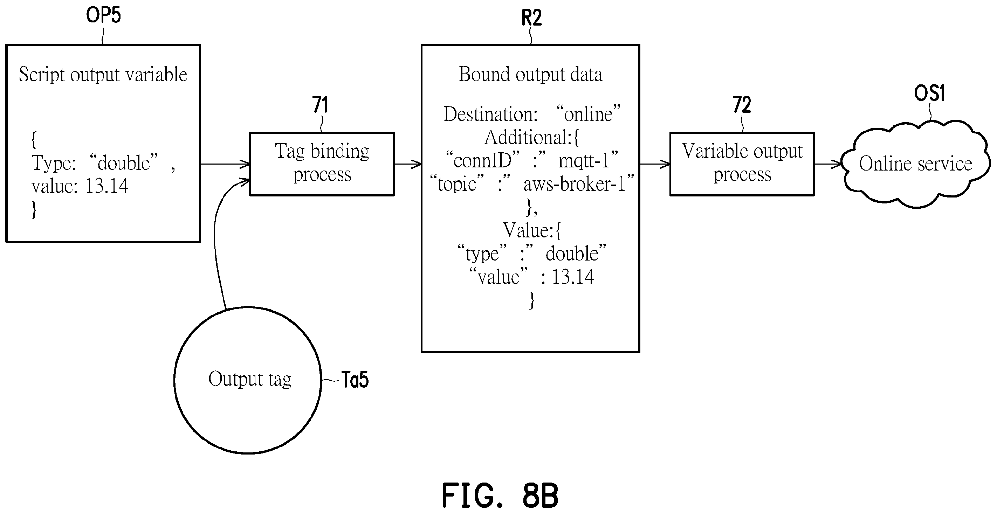

For example, FIG. 8A and FIG. 8B are schematic diagrams of output tag bound with script output variables according to an embodiment of the present disclosure. Referring to FIG. 8A, the processor 111 may obtain the script output variable OP4 generated by executing the logic script. Through the tag binding operation 71, the processor 111 may obtain the bound output data R1 according to the data output property and output destination of the output tag Ta4. The bound output data R1 may include the data output property and output destination of the script output variable OP4 and the output tag Ta4. After executing the variable output process 72, the processor 111 may store the script output variable OP4 to the local database db1 according to the bound output data R1. For example, the script output variable OP4 will be converted into a JSON object and stored in the local database db1.

In addition, please refer to FIG. 8B, the processor 111 may obtain the script output variable OP5 generated by executing the logic script. Through the tag binding operation 71, the processor 111 may obtain the bound output data R2 according to the data output property and output destination of the output tag Ta5. The bound output data R2 may include data output properties and output destinations of the script output variable OP5 and the output tag Ta5. After executing the variable output process 72, the processor 111 may transmit the script output variable OP5 to the online service OS1 according to the bound output data R2. For example, the script output variable OP5 may be transmitted to a specific application service on the cloud service platform according to the MQTT protocol. More specifically, in some embodiments, when executing the variable output processing 72, the processor 111 may determine whether the output destination in the output tag Ta5 is an offline destination or an online destination, and further parse the data output properties in the output tag Ta5 according to the above judgment result.

It should be noted that the above description is based on the steps shown in FIG. 6 being executed by the IoT gateway 110, but the present disclosure is not limited thereto. In other embodiments, each step shown in FIG. 6 may also be executed by other computer devices or cloud servers.

It is worth mentioning that in some embodiments, the processor 111 may extract the first script input variable from the first source data belonging to the first data format according to the data property and data source of the input tag. Furthermore, the processor 111 may also extract the second script input variable from the second source data belonging to the second data format according to another data property and another data source of the input tag. In other words, by defining the same input tag to correspond to different data properties and different data sources, users may flexibly replace script input variables without changing the script logic.

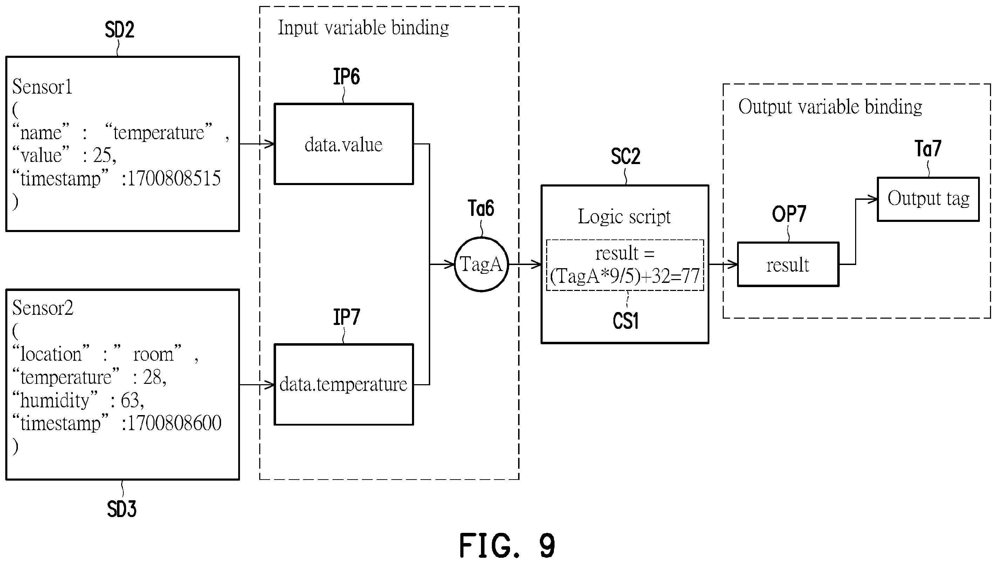

For example, FIG. 9 is a schematic diagram of input tags bound with different script input variables of different data formats according to an embodiment of the present disclosure. Please refer to FIG. 9. The source data SD2 and source data SD3 come from different temperature sensors and have different data formats. For example, the sensed temperature corresponds to the key "value" in the source data SD2, but the sensed temperature corresponds to the key "temperature" in the source data SD3. The processor 111 may define the data property and data source of the input tag Ta6 based on the data schema format (i.e., the first data format) of the source data SD2 (i.e., the first source data), so that the input tag Ta6 may be used to indicate to use the value of a data field in the source data SD2 as the script input variable IP6 (i.e., the first script input variable). Similarly, the processor 111 may define the data property and data source of the input tag Ta6 based on the data schema format (i.e., the second data format) of the source data SD3 (i.e., the second source data), so that the input tag Ta6 may be used to indicate to use the value of a data field in the source data SD3 as the script input variable IP7 (i.e., the second script input variable).

In other words, even if the data formats provided by different temperature sensors are different, the script logic CS1 in the logic script SC2 does not need to be changed. The script logic CS1 in the logic script SC2 may obtain the script input variables that meet the script requirements through the input tag Ta6. After executing the script logic CS 1 in the logic script SC2, the script output variable OP7 may be output to the data destination specified by the output tag Ta7 based on binding with the output tag Ta7.

It is also worth mentioning that in some embodiments, the processor 111 may extract the first script input variable from the source data according to the data property and data source of the first input tag. Furthermore, the processor 111 may also extract the second script input variable from the source data according to the data property and data source of the second input tag. In other words, different input tags may be created based on the same source data.

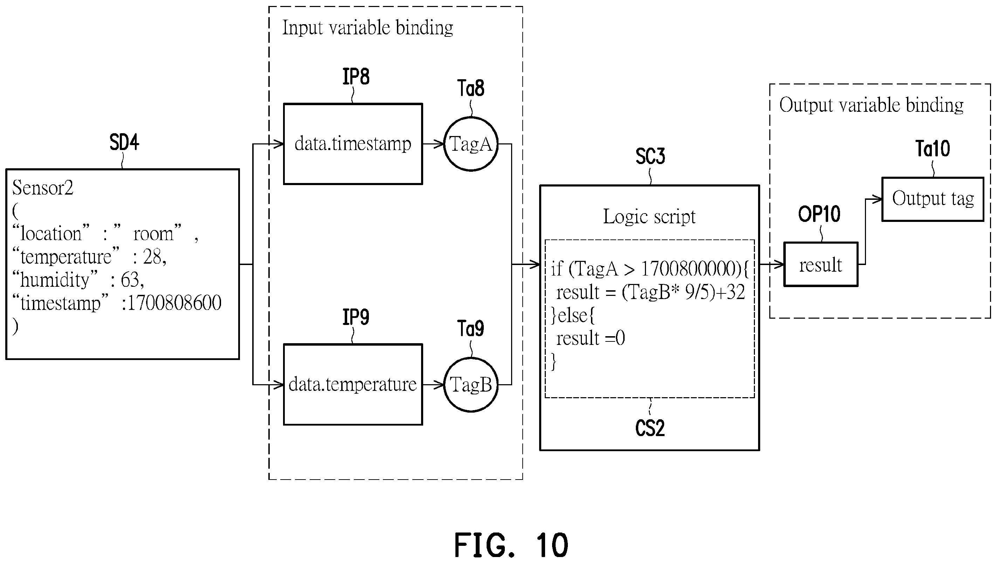

For example, FIG. 10 is a schematic diagram of binding multiple input tags to the same source data according to an embodiment of the present disclosure. Please refer to FIG. 10. The source data SD4 may be the sensing data provided by the temperature sensor. The processor 111 may define the data property and data source of the input tag Ta8 and the data property and data sources of the input tag Ta9 based on the data schema format of the source data SD4. The input tag Ta8 may be used to indicate to use the value of a data field in the source data SD4 as the script input variable IP8 (i.e., the first script input variable). The input tag Ta9 may be used to indicate to use the value of another data field in the source data SD4 as the script input variable IP9 (that is, the second script input variable).

That is to say, in some embodiments, the logic script may be established based on multiple input tags, and these input tags are used to indicate different data fields in the source data. In the example of FIG. 10, the processor 111 may discard the temperature sensing results between specific times according to the script logic CS2 in the logic script SC3. In addition, after executing the script logic CS2 in the logic script SC3, the script output variable OP10 may be output to the data destination specified by the output tag Ta10 based on binding with the output tag Ta10.

It should be noted that any content of each embodiment of the present application, as well as any content of the same embodiment, may be combined freely. Any combination of the above is within the scope of the disclosure.

To sum up, in the embodiment of the present disclosure, after defining the data properties and data sources of the input tags, a visual programming editing tool may be used and the input tags may serve as script input to edit the logic script. In addition, after defining the data output properties and output destination of the output tag, it is possible to use visual programming editing tools and input tags to edit the logic script. In this way, not only that it is possible to achieve no-code/low-code, but also users are allowed to flexibly define the input data and data output flow of the logic script without having to customize the logic script according to changes in IoT scenarios. As a result, the convenience and efficiency of deploying IoT gateways and edge computing may be significantly improved.

## Claims

1. A script variable binding method, comprising:
defining a data property and a data source of an input tag (Ta1, Ta2, Ta6, Ta8, Ta9);
generating a logic script (SC, SC2, SC3) based on the input tag (Ta1, Ta2, Ta6, Ta8, Ta9) using a visual programming editing tool (311), comprising:
defining a data output property and an output destination of an output tag (Ta3, Ta4, Ta5, Ta7, Ta10); and
generating the logic script (SC, SC2, SC3) based on the input tag (Ta1, Ta2, Ta6, Ta8, Ta9) and the output tag (Ta3, Ta4, Ta5, Ta7, Ta10) using the visual programming editing tool (311), comprising:
recording the data property and the data source of the input tag in a configuration of a logical executor; and
recording the data output property and the output destination of the output tag (Ta3, Ta4, Ta5, Ta7, Tal0) in a metadata of the logic script (SC, SC2, SC3);
when executing the logic script (SC, SC2, SC3), determining a script input variable (32, IP1, IP6, IP7, IP8, IP9) based on the input tag in the configuration of the logic executor and extracting the script input variable (32, IP1, IP6, IP7, IP8, IP9) from a source data (SD1, SD2, SD3, SD4) provided by an Internet of Things (IoT) device according to the data property and the data source of the input tag (Ta1, Ta2, Ta6, Ta8, Ta9);
when executing the logic script (SC, SC2, SC3), generating a script output variable (33, OP4, OP5, OP7, OP10) based on a computational logic of the logic script (SC, SC2, SC3) and the script input variable (32, IP1, IP6, IP7, IP8, IP9) corresponding to the input tag (Ta1, Ta2, Ta6, Ta8, Ta9); and
outputting the script output variable (33, OP4, OP5, OP7, OP10) to a data destination.

2. The script variable binding method according to claim 1, wherein extracting the script input variable (32, IP1, IP6, IP7, IP8, IP9) from the source data (SD1, SD2, SD3, SD4) provided by the IoT device according to the data property and the data source of the input tag (Ta1, Ta2, Ta6, Ta8, Ta9) comprises:
extracting a first script input variable (32, IP1, IP6, IP7, IP8, IP9) from a first source data (SD1, SD2, SD3, SD4) belonging to a first data format according to the data property and data source of the input tag (Ta1, Ta2, Ta6, Ta8, Ta9); and
extracting a second script input variable (32, IP1, IP6, IP7, IP8, IP9) from a second source data belonging to a second data format according to another data property and another data source of the input tag (Ta1, Ta2, Ta6, Ta8, Ta9).

3. The script variable binding method according to claim 1, wherein the input tag (Ta1, Ta2, Ta6, Ta8, Ta9) comprises a first input tag (Ta1, Ta2, Ta6, Ta8, Ta9) and a second input tag (Ta1, Ta2, Ta6, Ta8, Ta9), and extracting the script input variable (32, IP1, IP6, IP7, IP8, IP9) from the source data (SD1, SD2, SD3, SD4) provided by the IoT device according to the data property and the data source of the input tag (Ta1, Ta2, Ta6, Ta8, Ta9) comprises:
extracting a first script input variable (32, IP1, IP6, IP7, IP8, IP9) from the source data (SD1, SD2, SD3, SD4) according to a data property and a data source of the first input tag (Ta1, Ta2, Ta6, Ta8, Ta9); and
extracting a second script input variable (32, IP1, IP6, IP7, IP8, IP9) from the source data (SD1, SD2, SD3, SD4) according to a data property and a data source of the second input tag (Ta1, Ta2, Ta6, Ta8, Ta9).

4. The script variable binding method according to claim 1, further comprising:
performing data formatting on the source data (SD1, SD2, SD3, SD4) provided by the IoT device.

5. The script variable binding method according to claim 1, wherein defining the data property and the data source of the input tag (Ta1, Ta2, Ta6, Ta8, Ta9) comprises:
providing a tag setting interface; and
determining the data property and the data source of the input tag (Ta1, Ta2, Ta6, Ta8, Ta9) according to a user operation performed on the tag setting interface.

6. The script variable binding method according to claim 1, wherein outputting the script output variable (33, OP4, OP5, OP7, OP10) to the data destination comprises:
outputting the script output variable (33, OP4, OP5, OP7, OP10) to a local database (db1) or an online service (OS1) according to the output destination and the data output property of the output tag (Ta3, Ta4, Ta5, Ta7, Ta10).

7. The script variable binding method according to claim 1, wherein defining the data output property and the output destination of the output tag (Ta3, Ta4, Ta5, Ta7, Ta10) comprises:
providing a tag setting interface; and
determining the data output property and the output destination of the output tag (Ta3, Ta4, Ta5, Ta7, Ta10) according to a user operation performed on the tag setting interface.

8. The script variable binding method according to claim 1, wherein the data output property of the output tag (Ta3, Ta4, Ta5, Ta7, Ta10) comprises a data storage path, a transmission protocol, service identification information of an online service (OS1), or a combination of the above.

9. An IoT gateway (110), comprising:
a transceiver (113);
a storage device; and
a processor (111) connected to the transceiver (113) and the storage device, and configured to perform the method according to any one of claims 1 to 8.

## Patentansprüche

1. Verfahren zum Binden von Skriptvariablen, umfassend:
Definieren einer Dateneigenschaft und einer Datenquelle eines Eingabe-Tags (Ta1, Ta2, Ta6, Ta8, Ta9);
Erzeugen eines logischen Skripts (SC, SC2, SC3) auf der Grundlage des Eingabe-Tags (Ta1, Ta2, Ta6, Ta8, Ta9) unter Verwendung eines visuellen Programmier-Editierwerkzeugs (311), umfassend:
Definieren einer Datenausgabeeigenschaft und eines Ausgabeziels eines Ausgabe-Tags (Ta3, Ta4, Ta5, Ta7, Ta10); und
Erzeugen des Logikskripts (SC, SC2, SC3) auf der Grundlage des Eingabe-Tags (Ta1, Ta2, Ta6, Ta8, Ta9) und des Ausgabe-Tags (Ta3, Ta4, Ta5, Ta7, Ta10) unter Verwendung des visuellen Programmier-Editierwerkzeugs (311), umfassend:
Aufzeichnen der Dateneigenschaft und der Datenquelle des Eingabe-Tags in einer Konfiguration eines Logikausführers; und
Aufzeichnen der Datenausgabeeigenschaft und des Ausgabeziels des Ausgabe-Tags (Ta3, Ta4, Ta5, Ta7, Ta10) in Metadaten des Logikskripts (SC, SC2, SC3);
wenn das Logikskript (SC, SC2, SC3) ausgeführt wird, Bestimmen einer Skripteingabevariablen (32, IP1, IP6, IP7, IP8, IP9) auf der Grundlage des Eingabe-Tags in der Konfiguration des Logikausführers und Extrahieren der Skripteingabevariablen (32, IP1, IP6, IP7, IP8, IP9) aus Quelldaten (SD1, SD2, SD3, SD4), die von einer Internet-der-Dinge (IoT) -Vorrichtung bereitgestellt werden, gemäß der Dateneigenschaft und der Datenquelle des Eingabe-Tags (Ta1, Ta2, Ta6, Ta8, Ta9);
wenn das Logikskript (SC, SC2, SC3) ausgeführt wird, Erzeugen einer Skriptausgabevariablen (33, OP4, OP5, OP7, OP10) auf der Grundlage einer Berechnungslogik des Logikskripts (SC, SC2, SC3) und der Skripteingabevariablen (32, IP1, IP6, IP7, IP8, IP9) entsprechend dem Eingabe-Tag (Ta1, Ta2, Ta6, Ta8, Ta9); und
Ausgeben der Skriptausgabevariablen (33, OP4, OP5, OP7, OP10) an ein Datenziel.

2. Verfahren zum Binden von Skriptvariablen gemäß Anspruch 1, wobei das Extrahieren der Skripteingabevariablen (32, IP1, IP6, IP7, IP8, IP9) aus den Quelldaten (SD1, SD2, SD3, SD4), die von der IoT-Vorrichtung bereitgestellt werden, gemäß der Dateneigenschaft und der Datenquelle des Eingabe-Tags (Ta1, Ta2, Ta6, Ta8, Ta9) umfasst:
Extrahieren einer ersten Skripteingabevariablen (32, IP1, IP6, IP7, IP8, IP9) aus ersten Quelldaten (SD1, SD2, SD3, SD4), die zu einem ersten Datenformat gehören, gemäß der Dateneigenschaft und der Datenquelle des Eingabe-Tags (Ta1, Ta2, Ta6, Ta8, Ta9); und
Extrahieren einer zweiten Skripteingabevariablen (32, IP1, IP6, IP7, IP8, IP9) aus zweiten Quelldaten, die zu einem zweiten Datenformat gehören, gemäß einer anderen Dateneigenschaft und einer anderen Datenquelle des Eingabe-Tags (Ta1, Ta2, Ta6, Ta8, Ta9).

3. Verfahren zum Binden von Skriptvariablen gemäß Anspruch 1, wobei das Eingabe-Tag (Ta1, Ta2, Ta6, Ta8, Ta9) ein erstes Eingabe-Tag (Ta1, Ta2, Ta6, Ta8, Ta9) und ein zweites Eingabe-Tag (Ta1, Ta2, Ta6, Ta8, Ta9) umfasst, und das Extrahieren der Skripteingabevariablen (32, IP1, IP6, IP7, IP8, IP9) aus den Quelldaten (SD1, SD2, SD3, SD4), die von der IoT-Vorrichtung bereitgestellt werden, gemäß der Dateneigenschaft und der Datenquelle des Eingabe-Tags (Ta1, Ta2, Ta6, Ta8, Ta9) umfasst:
Extrahieren einer ersten Skripteingabevariablen (32, IP1, IP6, IP7, IP8, IP9) aus den Quelldaten (SD1, SD2, SD3, SD4) gemäß einer Dateneigenschaft und einer Datenquelle des ersten Eingabe-Tags (Ta1, Ta2, Ta6, Ta8, Ta9); und
Extrahieren einer zweiten Skripteingabevariablen (32, IP1, IP6, IP7, IP8, IP9) aus den Quelldaten (SD1, SD2, SD3, SD4) gemäß einer Dateneigenschaft und einer Datenquelle des zweiten Eingabe-Tags (Ta1, Ta2, Ta6, Ta8, Ta9).

4. Verfahren zum Binden von Skriptvariablen gemäß Anspruch 1, ferner umfassend:
Durchführen einer Datenformatierung an den Quelldaten (SD1, SD2, SD3, SD4), die von der IoT-Vorrichtung bereitgestellt werden.

5. Verfahren zum Binden von Skriptvariablen gemäß Anspruch 1, wobei das Definieren der Dateneigenschaft und der Datenquelle des Eingabe-Tags (Ta1, Ta2, Ta6, Ta8, Ta9) umfasst:
Bereitstellen einer Tag-Einstellungsschnittstelle; und
Bestimmen der Dateneigenschaft und der Datenquelle des Eingabe-Tags (Ta1, Ta2, Ta6, Ta8, Ta9) gemäß einer Benutzeroperation, die auf der Tag-Einstellungsschnittstelle durchgeführt wird.

6. Verfahren zum Binden von Skriptvariablen gemäß Anspruch 1, wobei das Ausgeben der Skriptausgabevariablen (33, OP4, OP5, OP7, OP10) an das Datenziel umfasst:
Ausgeben der Skriptausgabevariablen (33, OP4, OP5, OP7, OP10) an eine lokale Datenbank (db1) oder einen Online-Dienst (OS1) entsprechend dem Ausgabeziel und der Datenausgabeeigenschaft des Ausgabe-Tags (Ta3, Ta4, Ta5, Ta7, Ta10).

7. Skriptvariablen-Bindungsverfahren nach Anspruch 1, wobei das Definieren der Datenausgabeeigenschaft und des Ausgabeziels des Ausgabe-Tags (Ta3, Ta4, Ta5, Ta7, Tal0) umfasst:
Bereitstellen einer Tag-Einstellungsschnittstelle; und
Bestimmen der Datenausgabeeigenschaft und des Ausgabeziels des Ausgabe-Tags (Ta3, Ta4, Ta5, Ta7, Ta10) gemäß einer Benutzeroperation, die an der Tag-Einstellungsschnittstelle durchgeführt wird.

8. Verfahren zum Binden von Skriptvariablen gemäß Anspruch 1, wobei die Datenausgabeeigenschaft des Ausgabe-Tags (Ta3, Ta4, Ta5, Ta7, Ta10) einen Datenspeicherpfad, ein Übertragungsprotokoll, eine Dienstidentifikationsinformation eines Online-Dienstes (OS1) oder eine Kombination der obigen umfasst.

9. IoT-Gateway (110), umfassend:
einen Transceiver (113);
eine Speichervorrichtung; und
einen Prozessor (111), der mit dem Transceiver (113) und der Speichervorrichtung verbunden ist und konfiguriert ist, um das Verfahren gemäß irgendeinem der Ansprüche 1 bis 8 auszuführen.

## Revendications

1. Un procédé de liaison de variables de script, comprenant :
le fait de définir une propriété de données et une source de données d'une balise d'entrée (Ta1, Ta2, Ta6, Ta8, Ta9) ;
le fait de générer un script logique (SC, SC2, SC3) basé sur la balise d'entrée (Ta1, Ta2, Ta6, Ta8, Ta9) en utilisant un outil d'édition de programmation visuelle (311), comprenant :
le fait de définir une propriété de sortie de données et une destination de sortie d'une balise de sortie (Ta3, Ta4, Ta5, Ta7, Ta10) ; et
le fait de générer le script logique (SC, SC2, SC3) en fonction de la balise d'entrée (Ta1, Ta2, Ta6, Ta8, Ta9) et de la balise de sortie (Ta3, Ta4, Ta5, Ta7, Ta10) en utilisant l'outil d'édition de programmation visuelle (311), comprenant :
le fait d'enregistrer la propriété de données et la source de données de la balise d'entrée dans une configuration d'un exécuteur logique ; et
le fait d'enregistrer la propriété de sortie de données et la destination de sortie de la balise de sortie (Ta3, Ta4, Ta5, Ta7, Ta10) dans des métadonnées du script logique (SC, SC2, SC3) ;
lors de l'exécution du script logique (SC, SC2, SC3), le fait de déterminer une variable (32, IP1, IP6, IP7, IP8, IP9) d'entrée de script sur la base de la balise d'entrée dans la configuration de l'exécuteur logique et d'extraire la variable (32, IP1, IP6, IP7, IP8, IP9) d'entrée de script à partir de données source (SD1, SD2, SD3, SD4) fournies par un dispositif d'Internet des objets (IdO) en fonction de la propriété des données et de la source des données de la balise d'entrée (Ta1, Ta2, Ta6, Ta8, Ta9) ;
lors de l'exécution du script logique (SC, SC2, SC3), le fait de générer une variable (33, OP4, OP5, OP7, OP10) d'émission de script sur la base d'une logique de calcul du script logique (SC, SC2, SC3) et de la variable (32, IP1, IP6, IP7, IP8, IP9) d'entrée de script correspondant à la balise d'entrée (Ta1, Ta2, Ta6, Ta8, Ta9) ; et
le fait de délivrer en sortie la variable (33, OP4, OP5, OP7, OP10) d'émission de script à une destination de données.

2. Le procédé de liaison de variables de script selon la revendication 1, dans lequel l'extraction de la variable (32, IP1, IP6, IP7, IP8, IP9) d'entrée de script à partir des données source (SD1, SD2, SD3, SD4) fournies par le dispositif d'IdO en fonction de la propriété des données et de la source des données de la balise d'entrée (Ta1, Ta2, Ta6, Ta8, Ta9) comprend :
le fait d'extraire une première variable (32, IP1, IP6, IP7, IP8, IP9) d'entrée de script à partir d'une première source de données (SD1, SD2, SD3, SD4) appartenant à un premier format de données en fonction de la propriété des données et de la source de données de la balise d'entrée (Ta1, Ta2, Ta6, Ta8, Ta9) ; et
le fait d'extraire une deuxième variable (32, IP1, IP6, IP7, IP8, IP9) d'entrée de script à partir d'une deuxième source de données appartenant à un deuxième format de données en fonction d'une autre propriété de données et d'une autre source de données de la balise d'entrée (Ta1, Ta2, Ta6, Ta8, Ta9).

3. Le procédé de liaison de variables de script selon la revendication 1, dans lequel la balise d'entrée (Ta1, Ta2, Ta6, Ta8, Ta9) comprend une première balise d'entrée (Ta1, Ta2, Ta6, Ta8, Ta9) et une deuxième balise d'entrée (Ta1, Ta2, Ta6, Ta8, Ta9), et l'extraction de la variable (32, IP1, IP6, IP7, IP8, IP9) d'entrée de script à partir des données source (SD1, SD2, SD3, SD4) fournies par le dispositif d'IdO en fonction de la propriété des données et de la source des données de la balise d'entrée (Ta1, Ta2, Ta6, Ta8, Ta9) comprend :
le fait d'extraire une première variable (32, IP1, IP6, IP7, IP8, IP9) d'entrée de script à partir des données sources (SD1, SD2, SD3, SD4) en fonction d'une propriété de données et d'une source de données de la première balise d'entrée (Ta1, Ta2, Ta6, Ta8, Ta9) ; et
le fait d'extraire une deuxième variable (32, IP1, IP6, IP7, IP8, IP9) d'entrée de script à partir des données sources (SD1, SD2, SD3, SD4) en fonction d'une propriété de données et d'une source de données de la deuxième balise d'entrée (Ta1, Ta2, Ta6, Ta8, Ta9).

4. Le procédé de liaison de variables de script selon la revendication 1, comprenant en outre :
le fait d'exécuter le formatage des données sur les données source (SD1, SD2, SD3, SD4) fournies par le dispositif IdO.

5. Le procédé de liaison de variables de script selon la revendication 1, dans lequel la définition de la propriété de données et de la source de données de la balise d'entrée (Ta1, Ta2, Ta6, Ta8, Ta9) comprend :
le fait de se mettre à disposition une interface de configuration des balises ; et
le fait de déterminer la propriété des données et la source des données de la balise d'entrée (Ta1, Ta2, Ta6, Ta8, Ta9) en fonction d'une opération effectuée par l'utilisateur sur l'interface de configuration des balises.

6. Le procédé de liaison de variables de script selon la revendication 1, dans lequel l'émission en sortie de la variable (33, OP4, OP5, OP7, OP10) d'émission de script vers la destination des données comprend :
le fait d'émettre en sortie la variable (33, OP4, OP5, OP7, OP10) d'émission de script vers une base de données locale (db1) ou un service en ligne (OS1) en fonction de la destination de sortie et de la propriété de sortie de données de la balise de sortie (Ta3, Ta4, Ta5, Ta7, Ta10).

7. Le procédé de liaison de variables de script selon la revendication 1, dans lequel la définition de la propriété de sortie des données et de la destination de sortie de la balise de sortie (Ta3, Ta4, Ta5, Ta7, Ta10) comprend :
le fait de se mettre à disposition une interface de configuration des balises ; et
le fait de déterminer la propriété de sortie des données et la destination de sortie de la balise de sortie (Ta3, Ta4, Ta5, Ta7, Ta10) en fonction d'une opération effectuée par l'utilisateur sur l'interface de configuration des balises.

8. Le procédé de liaison de variables de script selon la revendication 1, dans lequel la propriété de sortie de données de la balise de sortie (Ta3, Ta4, Ta5, Ta7, Ta10) comprend un chemin de stockage de données, un protocole de transmission, des informations d'identification de service d'un service en ligne (OS1), ou une combinaison de ce qui précède.

9. Une passerelle IdO (110), comprenant :
un émetteur-récepteur (113) ;
un dispositif de stockage ; et
un processeur (111) connecté à l'émetteur-récepteur (113) et au dispositif de stockage, et configuré pour mettre en œuvre le procédé selon l'une quelconque des revendications 1 à 8.
